# EUROPEAN PATENT SPECIFICATION

(11) **EP 4 308 993 B1**
(45) Date of publication and mention of the grant of the patent: **08.10.2025**
(21) Application number: 22712598.6
(22) Date of filing: 15.03.2022
(51) Int. Cl.: G02B 27/00, G02B 27/01, G02B 27/42

(54) **DISPLAY STRUCTURE AND DISPLAY DEVICE**
ANZEIGESTRUKTUR UND ANZEIGEVORRICHTUNG
STRUCTURE D'AFFICHAGE ET DISPOSITIF D'AFFICHAGE

(30) Priority: 17.03.2021 FI 20215292
(43) Date of publication of application: 24.01.2024
(73) Proprietor: Dispelix Oy, 02130 Espoo (FI)
(72) Inventor: VARTIAINEN, Ismo, 00250 Helsinki (FI); OLKKONEN, Juuso, 02350 Espoo (FI)
(74) Representative: Schüssler, Andrea
(86) International application number: PCT/FI2022/050166
(87) International publication number: WO 2022/195166

(56) References cited:
- WO-A1-2020/173224
- US-A1- 2010 277 803
- US-A1- 2018 081 176
- US-A1- 2020 142 202
- US-A1- 2020 183 169

## Description

### FIELD OF TECHNOLOGY

This disclosure concerns display devices. In particular, this disclosure concerns waveguide-based display devices with exit pupil expansion properties, and structures therefor.

### BACKGROUND

Waveguide-based display devices with exit pupil expansion properties are commonly used in a variety of applications, for example, in head-mounted see-through display devices (e.g. smart glasses).

In general, such devices must be carefully designed to limit optical losses related to coupling of light into a waveguide. Conventionally, such optical in-coupling losses are reduced by usage of polarization-dependent in-coupling structures, such as polarization-dependent diffraction gratings, in conjunction with polarization-altering elements, such as waveplates. However, such arrangements may increase a complexity of a display device.

In light of the above, it may be desirable to develop new structures related to waveguide-based display devices.

US2020142202A1 discloses relevant prior art.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, a display structure according to claim 1 is provided.

According to a second aspect, a display device comprising a display structure according to the first aspect is provided.

### BRIEF DESCRIPTION OF THE DRAWINGS

The present disclosure will be better understood from the following detailed description read in light of the accompanying drawings, wherein:
**FIG. 1** shows a display structure according to an embodiment not covered by the subject-matter of the claims,
**FIG. 2** depicts another display structure according to an embodiment,
**FIG. 3** shows another display structure according to an embodiment, and
**FIG. 4** illustrates a display device according to an embodiment.

Unless specifically stated to the contrary, any drawing of the aforementioned drawings may be not drawn to scale such that any element in said drawing may be drawn with inaccurate proportions with respect to other elements in said drawing in order to emphasize certain structural aspects of the embodiment of said drawing.

Moreover, corresponding elements in the embodiments of any two drawings of the aforementioned drawings may be disproportionate to each other in said two drawings in order to emphasize certain structural aspects of the embodiments of said two drawings.

### DETAILED DESCRIPTION

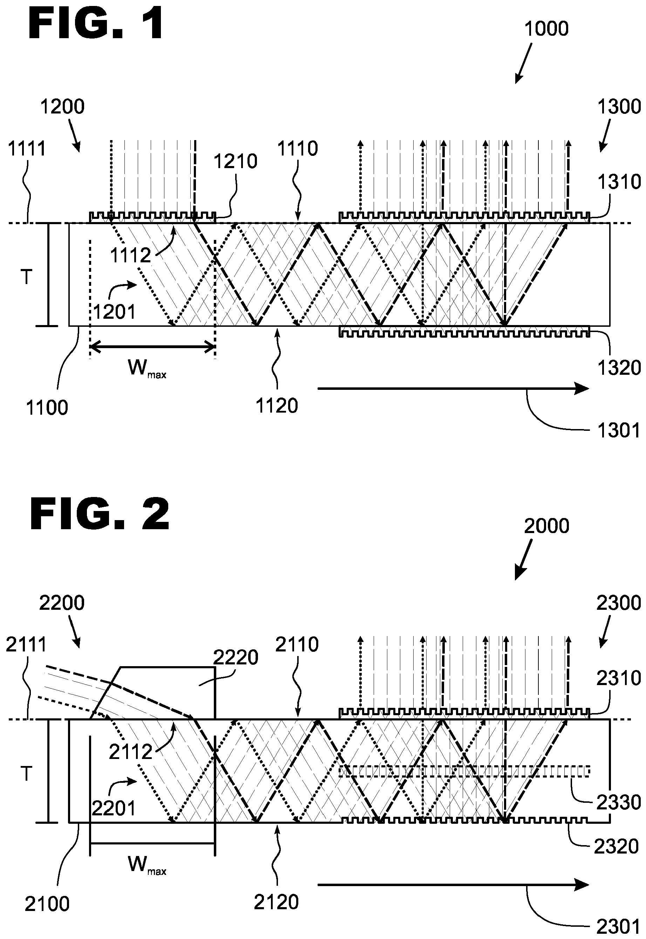

FIG. 1 depicts a display structure 1000 according to an embodiment not covered by the subject-matter of the claims.

Throughout this specification, a "display device" or a "screen" may refer to an operable device, such as an electronic device, suitable for or configured to display visual images to a user. Additionally or alternatively, a display device may refer to an electronic visual display device. A display device may generally comprise any part(s) or element(s), e.g., optical and/or electrical/electronic part(s) or element(s), necessary or beneficial for its operation.

Furthermore, a "display structure" may refer to at least part of an operable display device. Additionally of alternatively, a display structure may refer to a structure for a display device.

In the embodiment of FIG. 1, the display structure 1000 comprises a waveguide 1100.

In this disclosure, a "waveguide" may refer to an optical waveguide. Additionally or alternatively, a waveguide may refer to a two-dimensional waveguide, wherein light may be confined along a thickness direction of said waveguide. Naturally, a "waveguide" may then refer to a layer of a waveguide, wherein light may be confined by total internal reflection.

The waveguide 1100 of the embodiment of FIG. 1 comprises a first face 1110 extending along a base plane 1111, a second face 1120 opposite the first face 1110, and an in-coupling region 1112 on the first face 1110.

In this disclosure, a "face" of a waveguide may refer to a part of a surface of said waveguide viewable from or facing a certain viewing direction. Additionally or alternatively, faces of a waveguide may refer to surfaces suitable for or configured to confine light in said waveguide by total internal reflection.

Throughout this specification, a "region" may refer to a portion of a face. Consequently, an "in-coupling region" on a first face of a waveguide may refer to a region on said first face suitable for or configured to receive light to be coupled into said waveguide for propagation in said waveguide by total internal reflection. Additionally or alternatively, an in-coupling region of a waveguide of a display structure comprising a display engine may refer to an intersection of an entrance region of an in-coupling structure and a largest illuminable region of a display engine, whereas an in-coupling region of a waveguide of a display structure not comprising a display engine may refer to an entrance region of an in-coupling structure.

Herein, a "base plane" may refer to a fictitious surface along which a first face of a waveguide extends. A base plane may be planar, for example, in case of a flat first face, or curved, for example, in case of a curved first face. Further, a first face of a waveguide "extending laterally along a base plane" may refer to first face having lateral directions along said base plane. Generally, the lateral extent of an element may be defined by projecting said element onto a base plane.

In the embodiment of FIG. 1, the display structure 1000 comprises an in-coupling structure 1200.

Throughout this disclosure, an "in-coupling structure" may refer to a structure suitable for or configured to couple an optical beam into a waveguide for propagation in the waveguide by total internal reflection. Generally, an in-coupling structure may be suitable for or configured to couple into a waveguide light, which passes into said waveguide via an entrance region on a first face of said waveguide. For example, an entrance region of an in-coupling structure comprising a diffractive in-coupling element may refer to a region on a first face the lateral extent of which is defined by the lateral extent of said diffractive in-coupling element. Similarly, an entrance region of an in-coupling structure comprising an in-coupling prism may refer to a region on a first face the lateral extent of which is defined by the lateral extent of a face of said in-coupling prism coupled with a waveguide.

The in-coupling structure 1200 of the embodiment of FIG. 1 is suitable for coupling an optical beam 1201 into the waveguide 1100 via the in-coupling region 1112 for propagation in the waveguide 1100 by total internal reflection.

Throughout this specification, an "optical beam" may refer to a directional flow of light radiating from a light source.

In the embodiment of FIG. 1, the display structure 1000 comprises an out-coupling structure 1300.

In this disclosure, an "out-coupling structure" may refer to a structure configured to couple light out of a waveguide.

The out-coupling structure 1300 of the embodiment of FIG. 1 is configured to perform exit pupil expansion by pupil replication along at least a first replication direction 1301 and to couple light from the optical beam 1201 out of the waveguide 1100.

Herein, "exit pupil expansion" may refer to a process of distributing light within a waveguide in a controlled manner so as to expand a portion of said waveguide where out-coupling of light occurs.

Further, "pupil replication" may refer to an exit pupil expansion process, wherein a plurality of exit sub-pupils are formed in an imaging system. It has been found that, in imaging systems relying on pupil replication for exit pupil expansion, individual exit sub-pupils are preferably arranged in an overlapping manner for all angles and all wavelengths throughout a lateral extent of an out-coupling region of a waveguide. Such arrangement of exit sub-pupils may enable avoiding the formation of spatial intensity variations in an out-coupled image, which are typically perceived as dark fringes.

Throughout this specification, a "first replication direction" may refer to a direction along which an out-coupling structure is configured to perform pupil replication. Additionally or alternatively, a first replication direction may refer to a direction extending parallel to a base plane.

Further, an out-coupling structure being configured to perform "pupil replication along at least a first replication direction" may refer to said out-coupling structure being configured to perform one-dimensional, for example, horizontal or vertical, pupil replication or two-dimensional, for example, horizontal and vertical, pupil replication.

In the embodiment of FIG. 1, the in-coupling region 1112 has a maximum width (Wₘₐₓ), the waveguide 1100 has a thickness (T) greater than 0.25 × Wₘₐₓ, and the out-coupling structure 1300 comprises a diffractive first out-coupling element 1310 and a diffractive second out-coupling element 1320 at least partly, i.e., partly or entirely, laterally overlapping the first out-coupling element 1310.

Generally, an out-coupling structure of a display structure comprising a diffractive first out-coupling element and a diffractive second out-coupling element at least partly laterally overlapping said first out-coupling element may facilitate increasing a thickness of a waveguide in order to limit optical in-coupling losses and/or to increase the mechanical stability of said waveguide without impairing the optical properties of the display structure.

Herein, a "maximum width" of an in-coupling region may refer to a measure, for example, a highest measure, of the extent of said in-coupling region along a first replication direction. For example, in case of a circular in-coupling region, a maximum width of said in-coupling region may refer to a diameter of said in-coupling region.

Further, a "thickness" of a waveguide may refer to a measure of the extent of said waveguide, measured from a first face to a second face. Additionally or alternatively, a thickness of a waveguide may be measured perpendicular to a base plane. Additionally or alternatively, a thickness of a waveguide may be measured from an in-coupling region to a second face.

In this specification, a "diffractive optical element", may refer to an optical element the operation of which is based on diffraction of light. Generally, a diffractive optical element may comprise structural features with at least one dimension of the order of the wavelengths of visible light, for example, at least one dimension less than one micrometer. Typical examples of diffractive optical elements comprise one- and two-dimensional diffraction gratings, which may be implemented as single-region diffraction gratings or as multi-region diffraction gratings. Diffraction gratings may generally be implemented, at least, as surface relief diffraction gratings or volume holographic diffraction gratings, and they may be configured to function as transmission- and/or reflection-type diffraction gratings.

Consequently, a "diffractive out-coupling element" may refer to a diffractive optical element forming a part of an out-coupling structure. Additionally or alternatively, a diffractive out-coupling element may refer to a diffractive optical element suitable for or configured to contribute to performing exit pupil expansion by pupil replication along at least a first replication direction and to coupling light out of a waveguide.

Further, a first element "at least partly laterally overlapping" a second element may refer to at least partial, i.e., partial or complete, overlapping of the projections of said first and second elements on a base plane.

In the embodiment of FIG. 1, the waveguide 1100 may be formed of glass. In other embodiments, a waveguide may comprise or be formed of any suitable material(s), such as glass(es) or polymer(s).

In the embodiment of FIG. 1, the waveguide 1100 may have a refractive index of approximately 2 throughout the visible spectrum. In other embodiments, a waveguide may have any suitable refractive index with any suitable dispersive properties.

The waveguide 1100 of the embodiment of FIG. 1 is bordered by air with a refractive index of approximately 1 throughout the visible spectrum. Consequently, the optical beam 1201 is confined within the waveguide 1100 by total internal reflections at two air-glass interfaces. In other embodiments, a waveguide may or may not be bordered by air.

Although not depicted in FIG. 1, the out-coupling structure 1300 may be configured to perform exit pupil expansion by pupil replication also along a second replication direction other than the first replication direction 1301. In such case, each of the first out-coupling element 1310 and the second out-coupling element 1320 may comprise a two-dimensional diffraction grating. In other embodiments, an out-coupling structure may or may not be configured to perform exit pupil expansion by pupil replication also along a second replication direction. In other embodiments, wherein an out-coupling structure is configured to perform exit pupil expansion by pupil replication also along a second replication direction, one or both of a first out-coupling element and a second out-coupling element may comprise a two-dimensional diffraction grating.

In some embodiments, an out-coupling structure of a display structure may be configured to perform one-dimensional exit pupil expansion by pupil replication along a first replication direction, and one or both of a first out-coupling element and a second out-coupling element may comprise a one-dimensional diffraction grating. In such embodiments, said display structure may or may not further comprise an intermediate pupil expansion structure configured to receive light from an in-coupling structure, to perform exit pupil expansion by pupil replication along a second replication direction other than said first replication direction, and to direct the light to an out-coupling structure.

In the embodiment of FIG. 1, the thickness, T, of the waveguide 1100 may be approximately 0.3 times the maximum width, Wₘₐₓ, of the in-coupling region 1112. In other embodiments, a waveguide may have any suitable thickness greater than 0.25 times a maximum width of an in-coupling region. In some embodiments, a thickness of a waveguide may be greater than or equal to 0.3, or 0.35, or 0.4 times a maximum width of an in-coupling region. Generally, a higher thickness of a waveguide in proportion to a maximum width of an in-coupling region may increase a mechanical stability thereof and/or reduce in-coupling losses in a display structure by decreasing the outcoupling effect associated with multiple interactions with an in-coupling structure.

In the embodiment of FIG. 1, the thickness, T, of the waveguide 1100 is less than 0.5 × Wₘₐₓ. In other embodiments, a waveguide may or may not have a thickness less than or equal to 0.5 times the maximum width of an in-coupling region. Generally, a waveguide having a thickness less than or equal to 0.5 times the maximum width of an in-coupling region may facilitate forming out-coupled images of higher quality even in the absence of out-coupling elements other than a first out-coupling element and a second out-coupling element.

In the embodiment of FIG. 1, the thickness, T, of the waveguide 1100 may be approximately 0.8 millimeters (mm). In other embodiments, a waveguide may have any suitable thickness, for example, a thickness greater than or equal to 0.2 mm or greater than or equal to 0.5 mm and/or less than or equal to 2 mm or less than or equal to 5 mm. Generally, an increased thickness of a waveguide may facilitate the fabrication of a display structure.

In the embodiment of FIG. 1, the maximum width, Wₘₐₓ, of the in-coupling region 1112 may be approximately 2.5 mm. In other embodiments, an in-coupling region may have any suitable maximum width, for example, a maximum width greater than or equal to 0.5 mm or greater than or equal to 1 mm and/or less than or equal to 5 mm or less than or equal to 10 mm.

In the embodiment of FIG. 1, the in-coupling structure 1200 comprises a diffractive in-coupling element 1210. In other embodiments, an in-coupling structure may or may not comprise a diffractive in-coupling element. Generally, an in-coupling structure comprising a diffractive in-coupling element may facilitate reducing a mass of a display structure.

The diffractive in-coupling element 1210 of the embodiment of FIG. 1 comprises a surface-relief diffraction grating. In other embodiments, wherein an in-coupling structure comprises a diffractive in-coupling element, said diffractive in-coupling element may or may not comprise a surface-relief diffraction grating. For example, in some of such embodiments, an in-coupling structure may comprise a volume holographic diffraction grating.

The diffractive in-coupling element 1210 of the embodiment of FIG. 1 is arranged on the first face 1110. In other embodiments, a diffractive in-coupling element may or may not be arranged on a first face of a display structure. For example, in some embodiments, a diffractive in-coupling element may be arranged on a second face or within a waveguide.

The out-coupling structure 1300 of the embodiment of FIG. 1 is configured to couple light out of the waveguide 1100 via the first face 1110. In other embodiments, an out-coupling structure may be configured to couple light out of a waveguide via a first face and/or a second face.

In the embodiment of FIG. 1, the first out-coupling element 1310 is arranged on the first face 1110, and the second out-coupling element 1320 is arranged on the second face 1120. In other embodiments, a first out-coupling element may or may not be arranged on a first face, and/or a second out-coupling element may or may not be arranged on a second face. For example, in some embodiments, a first out-coupling element and/or a second out-coupling element may be arranged within a waveguide. Generally, a first out-coupling element and/or a second out-coupling element being arranged onto face(s) of a waveguide may facilitate fabrication of a display structure.

Each of the first out-coupling element 1310 and the second out-coupling element 1320 comprises a surface-relief diffraction grating. In other embodiments, one or both of a first out-coupling element and a second out-coupling element may or may not comprise a surface-relief diffraction grating. In some embodiments, both of a first out-coupling element and a second out-coupling element comprises a volume holographic diffraction grating. In embodiments, wherein one of a first out-coupling element and a second out-coupling element comprises a surface-relief diffraction grating, the other may comprise a volume holographic diffraction grating.

In the embodiment of FIG. 1, the surface-relief diffraction gratings of the first out-coupling element 1310 and the second out-coupling element 1320 are formed in patterned films arranged on the waveguide 1100. In other embodiments, wherein a first out-coupling element and/or a second out-coupling element comprises a surface-relief diffraction grating, said surface-relief diffraction grating may or may not be formed in a patterned film arranged on a waveguide. For example, in some of such embodiments, a surface-relief diffraction grating may be formed directly in a waveguide.

Although the surface-relief diffraction gratings of the diffractive in-coupling element 1210, the first out-coupling element 1310, and the second out-coupling element 1320 are schematically depicted in FIG. 1 as binary diffraction gratings, any suitable type(s) of surface-relief diffraction gratings, such as binary, and/or blazed, and/or slanted, and/or multilevel, and/or analog diffraction gratings may be utilized in any or all of a diffractive in-coupling element, a first out-coupling element, and a second out-coupling element. Naturally, such surface-relief diffraction gratings may be configured with additional features, such as spatial diffraction efficiency modulation properties in order to improve waveguide efficiency and image uniformity, in any suitable manner(s), for example, by depth, duty cycle, or slant modulation.

Further, although FIG. 1 depicts a single waveguide 1100, a display structure may generally comprise one or more waveguides. In embodiments, wherein a display structure comprises two or more waveguides, said waveguides may be arranged in any suitable manner. In some of such embodiments, such waveguides may be stacked on one another.

FIG. 2 depicts a display structure 2000 according to an embodiment. The embodiment of FIG. 2 may be in accordance with any of the embodiments disclosed with reference to or in conjunction with FIG. 1. Additionally or alternatively, although not explicitly shown in FIG. 2, the embodiment of FIG. 2 or any part thereof may generally comprise any features and/or elements of the embodiment of FIG. 1.

In the embodiment of FIG. 2, the display structure 2000, comprises a waveguide 2100, comprising a first face 2110 extending along a base plane 2111, a second face 2120 opposite the first face 2110, and an in-coupling region 2112 on the first face 2110; an in-coupling structure 2200 for coupling an optical beam 2201 into the waveguide 2100 via the in-coupling region 2112 for propagation in the waveguide 2100 by total internal reflection; and an out-coupling structure 2300 configured to perform exit pupil expansion by pupil replication along at least a first replication direction 2301 and to couple light from the optical beam 2201 out of the waveguide 2100.

The in-coupling region 2112 has a maximum width (Wₘₐₓ), measured along the first replication direction 2301, and the waveguide 2100 has a thickness (T), measured from the first face 2110 to the second face 2120, greater than 0.25 times Wₘₐₓ. The out-coupling structure 2300 comprises a diffractive first out-coupling element 2310 and a diffractive second out-coupling element 2320 at least partly laterally overlapping the first out-coupling element 2310.

In the embodiment of FIG. 2, the in-coupling structure 2200 comprises an in-coupling prism 2220. The in-coupling prism 2220 is attached to the waveguide 2100. In other embodiments, an in-coupling structure may or may not comprise an in-coupling prism.

In the embodiment of FIG. 2, the first out-coupling element 2310 is arranged on the first face 2110, and the second out-coupling element 2320 is arranged on the second face 2120.

Each of the first out-coupling element 2310 and the second out-coupling element 2320 comprises a surface-relief diffraction grating. The surface-relief diffraction grating of the first out-coupling element 2310 is formed in a patterned film arranged on the waveguide 2100, whereas the surface-relief diffraction grating of the second out-coupling element 2320 is formed directly in the waveguide 2100. In other embodiments, one or both of a first out-coupling element and a second out-coupling element may or may not be formed directly in a waveguide.

As indicated using dashed lines in FIG. 2, the out-coupling structure 2300 of the embodiment of FIG. 2 comprises a diffractive third out-coupling element 2330 arranged within the waveguide 2100, the third out-coupling element 2330 at least partly laterally overlapping each of the first out-coupling element 2310 and the second out-coupling element 2320. In other embodiments not covered by the subject-matter of the claims, an out-coupling structure may not comprise such diffractive third out-coupling element. Generally, an out-coupling structure comprising a diffractive third out-coupling element overlapping each of a first out-coupling element and a second out-coupling element and arranged within a waveguide may further increase a density of exit sub-pupils, which may, in turn, facilitate increasing a thickness of a waveguide further without impairing the optical properties of a display structure.

The out-coupling structure comprises a diffractive third out-coupling element arranged within a waveguide and at least partly laterally overlapping each of a first out-coupling element and a second out-coupling element, said out-coupling structure may further comprise one or more additional out-coupling elements, each of the one or more additional out-coupling elements arranged within said waveguide and overlapping each of said first out-coupling element, said second out-coupling element, and said third out-coupling element.

In case the out-coupling structure 2000 of the embodiment of FIG. 2 comprises the third out-coupling element 2330, T may be greater than or equal to 0.5 × Wₘₐₓ, or greater than or equal to 0.6 × Wₘₐₓ, or greater than or equal to 0.7 × Wₘₐₓ, or greater than or equal to 0.8 × Wₘₐₓ, or greater than or equal to 0.9 × W_{max·} The out-coupling structure comprises a third out-coupling element overlapping each of a first out-coupling element and a second out-coupling element, and the waveguide has any suitable thickness greater than 0.25 times a maximum width of an in-coupling region.

The third out-coupling element 2330 of the embodiment of FIG. 2 may comprise a volume holographic diffraction grating. The volume holographic diffraction grating of the third out-coupling element 2330 may be implemented as a so-called "thin transmission volumetric holographic diffraction grating, having a thickness less than 0.1 mm and being operable as a transmission grating. The volume holographic diffraction grating of the third out-coupling element 2330 may be implemented as a so-called "thick" volume holographic diffraction grating, having a thickness of at least 0.1 mm and being operable as a transmission and/or reflection mode diffraction grating.

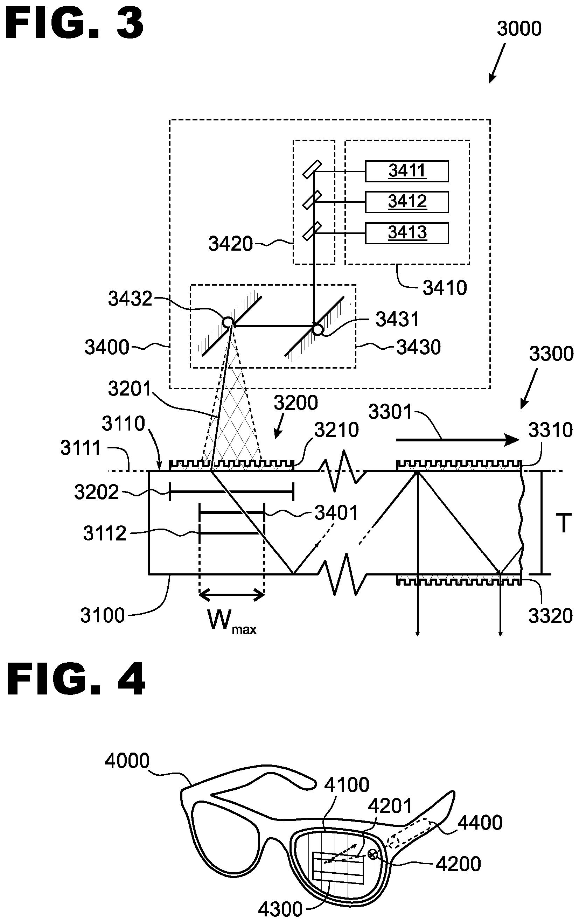

FIG. 3 depicts a display structure 3000 according to an embodiment. The embodiment of FIG. 3 is in accordance with the embodiment disclosed with reference to or in conjunction with FIG. 2

Additionally or alternatively, although not explicitly shown in FIG. 3, the embodiment of FIG. 3 or any part thereof comprises any features and/or elements of the embodiment of FIG. 2

In the embodiment of FIG. 3, the display structure 3000 comprises a waveguide 3100, comprising a first face 3110 extending laterally along a base plane 3111, and an in-coupling region 3112 on the first face 3110. The display structure 3000 further comprises an in-coupling structure 3200 comprising a diffractive in-coupling element 3210 for coupling an optical beam 3201 into the waveguide 3100 via the in-coupling region 3112 for propagation in the waveguide 3100 by total internal reflection as well as an out-coupling structure 3300 configured to perform exit pupil expansion by pupil replication along at least a first replication direction 3301 and to couple light from the optical beam 3201 out of the waveguide 3100.

The display structure 3000 of the embodiment further comprises a display engine 3400 for directing the optical beam 3201 to the in-coupling structure 3200. In other embodiments, a display structure may or may not comprise such display engine.

Throughout this disclosure, a "display engine" may refer to a part of a display structure suitable for or configured to form an image, for example, in the angular spectrum, to be passed on to an in-coupling structure. Generally, a display engine may have a (largest) illuminable region on a first face of a waveguide. An illuminable region of a display engine may laterally at least partially, i.e., partially or entirely, overlap with an entrance region of an in-coupling structure. A display engine may or may not form an exit pupil. In embodiments, wherein a display engine forms an exit pupil, said exit pupil may overlap with an entrance pupil of an in-coupling structure.

The display engine 3400 of the embodiment of FIG. 3 is implemented as a scanner-based display engine. In other embodiments, wherein a display structure comprises a display engine, said display engine may be implemented in any suitable manner, for example, as a scanner-based display engine or as a panel-based display engine. Generally, utilization of scanner-based display engines may facilitate reducing a size, and/or increasing a brightness, and/or increasing contrast of a display structure. As usage of scanner-based display engines typically results in illuminable regions of smaller dimensions, waveguides of reduced thicknesses may be used in conjunction with such display engines.

In the embodiment of FIG. 3, the display engine 3400 comprises an illumination unit 3410, comprising a blue-emitting first laser 3411, a green-emitting second laser 3412, and a red-emitting third laser 3413; a combination unit 3420 for combining light from the first laser 3411, the second laser 3412, and the third laser 3413 to form the optical beam 3201; and a scanner unit 3430 comprising a first deflection mirror 3431 and a second deflection mirror 3432 and configured to collect light from the combination unit 3420 and to drive the first deflection mirror 3431 and the second deflection mirror 3432 such that the optical beam 3201 impinges on different locations on the in-coupling region 3112.

The display engine 3400 of the embodiment of FIG. 3 comprises a laser-based illumination unit. In other embodiments, a display engine may comprise any suitable type of illumination unit, for example, a laser-based illumination unit and/or a light-emitting diode based illumination unit.

The scanner unit 3430 of the embodiment of FIG. 3 may be implemented as a dual one-dimensional micro-electro-mechanical mirror scanner unit. In other embodiments, a scanner-based display engine may comprise any suitable type of scanner unit, for example, a dual one-dimensional micro-electro-mechanical mirror (MEMS mirror) scanner unit or a two-dimensional MEMS mirror scanner unit.

On one hand, the in-coupling structure 3200 of the embodiment of FIG. 3 has an entrance region 3202 on the first face 3110, the entrance region 3202 defined by the lateral extent of the diffractive in-coupling element 3210. On the other hand, the display engine 3400 has an illuminable region 3401 on the first face 3110. The lateral extent of the illuminable region 3401 is dependent on the movement range of the first deflection mirror 3431 and the second deflection mirror 3432.

As the display structure 3000 of the embodiment of FIG. 3 comprises a display engine 3400, the lateral extent of the in-coupling region 3112 is defined as the intersection of the entrance region 3202 and the illuminable region 3401. In the embodiment of FIG. 3, the in-coupling region 3112 has a maximum width, Wₘₐₓ, measured along the first replication direction 3301; the waveguide 3100 has a thickness, T, greater than 0.25 × Wₘₐₓ; and the out-coupling structure 3300 comprises a diffractive first out-coupling element 3310 and a diffractive second out-coupling element 3320 at least partly laterally overlapping the first out-coupling element 3310.

In the embodiment of FIG. 3, the waveguide 3100 may have a T, of approximately 0.5 mm, and the in-coupling region 3112 has a Wₘₐₓ of approximately 1.2 mm. Consequently, T may be approximately 0.4 × Wₘₐₓ.

Above, mainly features of display structures are discussed. In the following, more emphasis will lie on features of display devices. What is said above about the ways of implementation, definitions, details, and advantages related to display structures applies, mutatis mutandis, to the display devices discussed below. The same applies vice versa.

FIG. 4 depicts a display device 4000 according to an embodiment. The embodiment of FIG. 4 is in accordance with any of the embodiments disclosed with reference to or in conjunction with any of FIGs. 2 and 3.

Additionally or alternatively, although not explicitly shown in FIG. 4, the embodiment of FIG. 4 or any part thereof may generally comprise any features and/or elements of any of the embodiments of FIGs. 1 to 3.

The display device 4000 of the embodiment of FIG. 4 comprises a display device in accordance with this specification.

In the embodiment of FIG. 4, the display device 4000 is implemented as a see-through head-mounted display device, more specifically, as spectacles comprising a see-through display. In other embodiments, a display device may be implemented in any suitable manner, for example, as a see-through and/or head-mounted display device.

In the embodiment of FIG. 4, the display device 4000 comprises a waveguide 4100, in-coupling structure 4200, an out-coupling structure 4300, and a display engine 4400. An optical beam 4201 directed by the display engine 4400 to the in-coupling structure 4200 may be coupled into the waveguide 4100 by the in-coupling structure 4200, and light from the optical beam 4201 may then be coupled out of the waveguide 4100 towards a user's eye by the out-coupling structure 4300.

It is to be understood that the embodiments described above may be used in combination with each other. Two or more of the embodiments may be combined together to form a further embodiment.

It is obvious to a person skilled in the art that with the advancement of technology, the basic idea of the invention may be implemented in various ways. The invention and its embodiments are thus not limited to the examples described above, instead they may vary within the scope of the claims.

It will be understood that any benefits and advantages described above may relate to one embodiment or may relate to several embodiments. The embodiments are not limited to those that solve any or all of the stated problems or those that have any or all of the stated benefits and advantages.

The term "comprising" is used in this specification to mean including the feature(s) or act(s) followed thereafter, without excluding the presence of one or more additional features or acts. It will further be understood that reference to 'an' item refers to one or more of those items.

### REFERENCE SIGNS

| | | | |
|---|---|---|---|
| Wₘₐₓ | maximum width | | |
| T | thickness | | |
| 1000 | display structure | 2300 | out-coupling structure |
| 1100 | waveguide | 2301 | first replication direction |
| 1110 | first face | | |
| 1111 | base plane | 2310 | first out-coupling element |
| 1112 | in-coupling region | | |
| 1120 | second face | 2320 | second out-coupling element |
| 1200 | in-coupling structure | | |
| 1201 | optical beam | 2330 | third out-coupling element |
| 1210 | diffractive in-cou-pling element | | |
| | | 3000 | display structure |
| 1300 | out-coupling structure | 3100 | waveguide |
| 1301 | first replication direction | 3110 | first face |
| | | 3111 | base plane |
| 1310 | first out-coupling element | 3112 | in-coupling region |
| | | 3200 | in-coupling structure |
| 1320 | second out-coupling element | 3201 | optical beam |
| | | 3202 | entrance region |
| 2000 | display structure | 3210 | diffractive in-coupling element |
| 2100 | waveguide | | |
| 2110 | first face | 3300 | out-coupling structure |
| 2111 | base plane | 3301 | first replication direction |
| 2112 | in-coupling region | | |
| 2120 | second face | 3310 | first out-coupling element |
| 2200 | in-coupling structure | | |
| 2201 | optical beam | 3320 | second out-coupling element |
| 2220 | in-coupling prism | | |
| 3400 | display engine | 3432 | second deflection mirror |
| 3401 | illuminable region | | |
| 3410 | illumination unit | 4000 | display device |
| 3411 | first laser | 4100 | waveguide |
| 3412 | second laser | 4200 | in-coupling structure |
| 3413 | third laser | 4201 | optical beam |
| 3420 | combination unit | 4300 | out-coupling structure |
| 3430 | scanner unit | 4400 | display engine |
| 3431 | first deflection mirror | | |

## Claims

1. A display structure (1000, 2000), comprising:
- a waveguide (1100) comprising a first face (1110) extending laterally along a base plane (1111), a second face (1120) opposite the first face (1110), and an in-coupling region (1112) on the first face (1110);
- an in-coupling structure (1200) for coupling an optical beam (1201) into the waveguide (1100) via the in-coupling region (1112) for propagation in the waveguide (1100, 2100) by total internal reflection; and
- an out-coupling structure (1300, 2300) configured to perform exit pupil expansion by pupil replication along at least a first replication direction (1301) and to couple light from the optical beam (1201) out of the waveguide (1100);
wherein the in-coupling region (1112) has a maximum width, Wₘₐₓ, measured along the first replication direction (1301); the waveguide (1100, 2100) has a thickness, T, measured from the first face (1110) to the second face (1120); and the out-coupling structure (1300, 2300) comprises a diffractive first out-coupling element (1310, 2310) arranged on the first face (1110, 2110) and a diffractive second out-coupling element (1320, 2320) arranged on the second face (1120, 2120), wherein the second out-coupling element (1320, 2320) is at least partly laterally overlapping the first out-coupling element (1310, 2310),
**characterised in that**
the thickness, T, is greater than 0.25 times the maximum width, Wₘₐₓ, of the in-coupling region (1112), and the out-coupling structure (2300) further comprises a diffractive third out-coupling element (2330) arranged within the waveguide (2100), the third out-coupling element (2330) at least partly laterally overlapping each of the first out-coupling element (2310) and the second out-coupling element (2320).

2. A display structure (1000) according to claim 1, wherein the thickness, T, of the wave- guide (1100) is greater than or equal to 0.3, or 0.35, or 0.4 times the maximum width, Wₘₐₓ, of the in-coupling region (1112).

3. A display structure (1000) according to any of the preceding claims, wherein the in-coupling structure (1200) comprises a diffractive in-coupling element (1210).

4. A display structure (2000) according to any of the preceding claims, wherein the in-coupling structure (2200) comprises an in-coupling prism (2220).

5. A display structure (1000) according to claim 1, wherein the thickness, T, of the wave- guide (1100) is greater than or equal to 0.5, or to 0.6, or to 0.7, or to 0.8, or to 0.9 times the maximum width, Wₘₐₓ, of the in-coupling region (1112).

6. A display structure (1000) according to any of claims 1 to 6, wherein the thickness, T, of the waveguide(1100) is less than or equal to 0.5 times the maximum width, Wₘₐₓ, of the in-coupling region (1112).

7. A display structure (3000) according to any of the preceding claims, comprising a display engine (3400) for directing the optical beam (3201) to the in-coupling structure (3200).

8. A display structure (3000) according to claim 7, wherein the display engine (3400) is implemented as a scanner-based display engine, e.g., a laser- scanning display engine.

9. A display device (4000), comprising a display structure (1000) according to any of the preceding claims.

10. A display device (4000) according to claim 9 implemented as a see-through display device.

11. A display device (4000) according to claim 9 or 10 implemented as a head-mounted display device.

## Patentansprüche

1. Anzeigestruktur (1000, 2000), umfassend:
- einen Wellenleiter (1100) umfassend eine erste Fläche (1110), die sich seitlich entlang einer Basisebene (1111) erstreckt, eine zweite Fläche (1120) gegenüber der ersten Fläche (1110) und einen Einkopplungsbereich (1112) auf der ersten Fläche (1110);
- eine Einkopplungsstruktur (1200) zum Koppeln eines optischen Strahls (1201) in den Wellenleiter (1100) über den Einkopplungsbereich (1112) zur Ausbreitung im Wellenleiter (1100, 2100) durch Totalreflexion; und
- eine Auskopplungsstruktur (1300, 2300), die so konfiguriert ist, dass sie eine Austrittspupillenerweiterung durch Pupillenreplikation entlang mindestens einer ersten Replikationsrichtung (1301) durchführt und Licht des optischen Strahls (1201) aus dem Wellenleiter (1100) auskoppelt;
wobei der Einkopplungsbereich (1112) eine maximale Breite, Wₘₐₓ, gemessen entlang der ersten Replikationsrichtung (1301), aufweist; der Wellenleiter (1100, 2100) eine Dicke, T, gemessen von der ersten Fläche (1110) zur zweiten Fläche (1120), aufweist; und die Auskopplungsstruktur (1300, 2300) ein beugendes erstes Auskopplungselement (1310, 2310), das auf der ersten Fläche (1110, 2110) angeordnet ist, und ein beugendes zweites Auskopplungselement (1320, 2320), das auf der zweiten Fläche (1120, 2120) angeordnet ist, umfasst, wobei das zweite Auskopplungselement (1320, 2320) das erste Auskopplungselement (1310, 2310) zumindest teilweise seitlich überlappt,
**dadurch gekennzeichnet, dass**
die Dicke, T, größer als das 0,25-fache der maximalen Breite, Wₘₐₓ, des Einkopplungsbereichs (1112) ist, und
die Auskopplungsstruktur (2300) ferner ein beugendes drittes Auskopplungselement (2330), das innerhalb des Wellenleiters (2100) angeordnet ist, umfasst, wobei das dritte Auskopplungselement (2330) das erste Auskopplungselement (2310) und das zweite Auskopplungselement (2320) jeweils zumindest teilweise seitlich überlappt.

2. Anzeigestruktur (1000) nach Anspruch 1, wobei die Dicke, T, des Wellenleiters (1100) größer als oder gleich dem 0,3- oder 0,35- oder 0,4-fachen der maximalen Breite, Wₘₐₓ, des Einkopplungsbereichs (1112) ist.

3. Anzeigestruktur (1000) nach einem der vorhergehenden Ansprüche, wobei die Einkopplungsstruktur (1200) ein beugendes Einkopplungselement (1210) umfasst.

4. Anzeigestruktur (2000) nach einem der vorhergehenden Ansprüche, wobei die Einkopplungstruktur (2200) ein Einkopplungsprisma (2220) umfasst.

5. Anzeigestruktur (1000) nach Anspruch 1, wobei die Dicke, T, des Wellenleiters (1100) größer als oder gleich dem 0,5- oder 0,6- oder 0,7- oder 0,8- oder 0,9-fachen der maximalen Breite, Wₘₐₓ, des Einkopplungsbereichs (1112) ist.

6. Anzeigestruktur (1000) nach einem der Ansprüche 1 bis 6, wobei die Dicke, T, des Wellenleiters (1100) weniger als oder gleich dem 0,5-fachen der maximalen Breite, Wₘₐₓ, des Einkopplungsbereichs (1112) ist.

7. Anzeigestruktur (3000) nach einem der vorhergehenden Ansprüche, umfassend ein Anzeigegerät (3400) zum Lenken des optischen Strahls (3201) auf die Einkopplungsstruktur (3200).

8. Anzeigestruktur (3000) nach Anspruch 7, wobei das Anzeigegerät (3400) als ein Scanner-basiertes Anzeigegerät, z.B. ein Laser-Scanning-Anzeigegerät, implementiert ist.

9. Anzeigevorrichtung (4000), umfassend eine Anzeigestruktur (1000) nach einem der vorhergehenden Ansprüche.

10. Anzeigevorrichtung (4000) nach Anspruch 9, die als eine durchsichtige Anzeigevorrichtung implementiert ist.

11. Anzeigevorrichtung (4000) nach Anspruch 9 oder 10, die als eine am Kopf befestigte Anzeigevorrichtung implementiert ist.

## Revendications

1. Structure d'affichage (1000, 2000), comprenant :
- un guide d'ondes (1100) comprenant une première face (1110) s'étendant latéralement le long d'un plan de base (1111), une deuxième face (1120) opposée à la première face (1110), et une région de couplage d'entrée (1112) sur la première face (1110) ;
- une structure de couplage d'entrée (1200) destinée à coupler un faisceau optique (1201) dans le guide d'ondes (1100) par l'intermédiaire de la région de couplage d'entrée (1112) à des fins de propagation dans le guide d'ondes (1100, 2100) par réflexion interne totale ; et
- une structure de couplage de sortie (1300, 2300) configurée pour effectuer une expansion de pupille de sortie par réplication de pupille le long d'au moins une première direction de réplication (1301) et pour coupler la lumière provenant du faisceau optique (1201) hors du guide d'ondes (1100) ;
dans laquelle la région de couplage d'entrée (1112) a une largeur maximale, Wₘₐₓ, mesurée le long de la première direction de réplication (1301) ; le guide d'ondes (1100, 2100) a une épaisseur, T, mesurée entre la première face (1110) et la deuxième face (1120) ; et la structure de couplage de sortie (1300, 2300) comprend un premier élément de couplage de sortie diffractif (1310, 2310) agencé sur la première face (1110, 2110) et un deuxième élément de couplage de sortie diffractif (1320, 2320) agencé sur la deuxième face (1120, 2120), dans lequel le deuxième élément de couplage de sortie (1320, 2320) chevauche au moins partiellement latéralement le premier élément de couplage de sortie (1310, 2310), **caractérisé en ce que**
l'épaisseur, T, est supérieure à 0,25 fois la largeur maximale, Wₘₐₓ, de la région de couplage d'entrée (1112), et
la structure de couplage de sortie (2300) comprend en outre un troisième élément de couplage de sortie diffractif (2330) agencé à l'intérieur du guide d'ondes (2100), le troisième élément de couplage de sortie (2330) chevauchant au moins partiellement latéralement chacun du premier élément de couplage de sortie (2310) et du deuxième élément de couplage de sortie (2320).

2. Structure d'affichage (1000) selon la revendication 1, dans laquelle l'épaisseur, T, du guide d'ondes (1100) est supérieure ou égale à 0,3, ou 0,35, ou 0,4 fois la largeur maximale, Wₘₐₓ, de la région de couplage d'entrée (1112).

3. Structure d'affichage (1000) selon l'une quelconque des revendications précédentes, dans laquelle la structure de couplage d'entrée (1200) comprend un élément de couplage d'entrée diffractif (1210).

4. Structure d'affichage (2000) selon l'une quelconque des revendications précédentes, dans laquelle la structure de couplage d'entrée (2200) comprend un prisme de couplage d'entrée (2220).

5. Structure d'affichage (1000) selon la revendication 1, dans laquelle l'épaisseur, T, du guide d'ondes (1100) est supérieure ou égale à 0,5, ou à 0,6, ou à 0,7, ou à 0,8, ou à 0,9 fois la largeur maximale, Wₘₐₓ, de la région de couplage d'entrée (1112).

6. Structure d'affichage (1000) selon l'une quelconque des revendications 1 à 6, dans laquelle l'épaisseur, T, du guide d'ondes (1100) est inférieure ou égale à 0,5 fois la largeur maximale, Wₘₐₓ, de la région de couplage d'entrée (1112).

7. Structure d'affichage (3000) selon l'une quelconque des revendications précédentes, comprenant un moteur d'affichage (3400) destiné à diriger le faisceau optique (3201) vers la structure de couplage d'entrée (3200).

8. Structure d'affichage (3000) selon la revendication 7, dans laquelle le moteur d'affichage (3400) est mis en œuvre sous la forme d'un moteur d'affichage à base de balayage, par exemple un moteur d'affichage à balayage laser.

9. Dispositif d'affichage (4000) comprenant une structure d'affichage (1000) selon l'une quelconque des revendications précédentes.

10. Dispositif d'affichage (4000) selon la revendication 9, mis en œuvre sous la forme d'un dispositif d'affichage semi-transparent.

11. Dispositif d'affichage (4000) selon la revendication 9 ou 10, mis en œuvre sous la forme d'un dispositif de visiocasque.
